# EUROPÄISCHE PATENTSCHRIFT

(11) **EP 0 439 754 B1**
(45) Veröffentlichungstag und Bekanntmachung des Hinweises auf die Patenterteilung: **26.07.1995**
(21) Anmeldenummer: 90124065.5
(22) Anmeldetag: 13.12.1990
(51) Int. Cl.: F01K 23/10, F01K 21/04, F01K 3/02

(54) **Verfahren zum Anfahren einer Kombianlage**
Method of starting a combined plant
Méthode de démarrage d'une centrale combinée

(30) Priorität: 31.01.1990 CH 312/90
(43) Veröffentlichungstag der Anmeldung: 07.08.1991
(73) Patentinhaber: ASEA BROWN BOVERI AG, 5400 Baden (CH)
(72) Erfinder: Frutschi, Hansulrich, CH-5223 Riniken (CH)

(56) Entgegenhaltungen:
- CH-A- 211 358
- DE-A- 3 331 153
- DE-B- 2 245 067
- GB-A- 1 173 923

## Beschreibung

### Technisches Gebiet

Die vorliegende Erfindung betrifft ein Verfahren zum Anfahren einer Kombianlage gemäss Oberbegriff des Anspruchs.

### Stand der Technik

Unter dem Begriff "kombinierte Gas-/Dampfturbinen-Kraftwerksanlage" -im folgenden kurz Kombianlage genannt- ist immer das Zusammenwirken einer Gasturbogruppe mit mindestens einem Dampfturbinenkreislauf zu verstehen, wobei die Abgase aus dem Betrieb der Gasturbogruppe durch einen Abhitzedampferzeuger (=Abhitzekessel) geleitet werden, in welchem das Restwärmepotential dieser Abgase zur Erzeugung des für die Beaufschlagung der Dampfturbine benötigten Dampfes herangezogen wird. Diese zusätzliche Dampfleistung führt zu einem höheren thermischen Wirkungsgrad der Anlage Diese Kombianlagen weisen sich dann durch sehr gute Konversionswirkungsgrade aus, die sich in der Grössenordnung von über 50% bewegen. Weil nun eine Diskrepanz zwischen den beiden Maschinenarten (Gasturbogruppe/Dampfturbinenkreislauf) bezüglich des jeweiligen zeitmässigen Startvermögens besteht, kann es beim Start zu einer Verzögerung im Hinblick auf die Verfügbarkeit der ganzen Kombianlage kommen. Ein weiterer Engpass kann sich im Anfahr vorgang dann ergeben, wenn gerade hierfür keine grosse elektrische Leistung zur Verfügung steht.

Aus GB-A-1 173 923 ist eine Schaltung bekanntgeworden, welche an sich eine Kombianlage darstellt. Diese besteht aus einer Gasturbine, welche mit einer Dampfturbine gekoppelt ist. Die Abgase aus der Gasturbine werden in einen Abhitzekessel geleitet, der in Wirkverbindung mit einem Vorerhitzer steht. Der Dampfkreislauf weist im wesentlichen einen Kondensator und einen Dampfspeicher auf. Der letztgenannte wird vorzugsweise mit Dampf aus dem Abhitzekessel aufgeladen, wobei dem Dampfspeicher für das Anfahren der Gasturbine eine gewisse Dampfmenge entnommen, welche der gekoppelten Dampfturbine zugeleitet wird. Grundsätzlich lässt sich ein Anfahren mit einer solchen Schaltung nicht schnell genug durchzuführen: Dies macht sich insbesondere dann gewichtig bemerkbar, wenn die Dampfturbine nach neuester Entwicklung nicht mehr bloss aus einer Druckstufe besteht, und wenn das Anfahren infolge einer zu geringen elektrischen Leistung normalerweise nicht durchgeführt werden kann. Bei letztgenannter Vorgabe ist es undenkbar, mit einem sogenannten "Black Start" die Anlage in Schwung zu bringen.

### Darstellung der Erfindung

Hier will die Erfindung Abhilfe schaffen. Der Erfindung, wie sie im Anspruch gekennzeichnet ist, liegt die Aufgabe zugrunde, bei einem Verfahren der eingangs genannten Art das Anfahren bei einer Kombianlage schneller zu gestalten, auch dann, wenn das Anfahrprogrann infolge einer zu kleinen elektrischen Leistung normalerweise nicht durchgeführt werden könnte. Danebst ist es Aufgabe der Erfindung, den Wirkungsgrad der Anlage, selbst bei obenbeschriebener Vorgabe, hoch zu halten, mindestens so hoch, wie ihn die Kombianlage mit gewöhnlichem Startvermögen aufweist.

Der wesentliche Vorteil der Erfindung ist darin zu sehen, dass mit Hilfe eines Dampfspeichers der Dampfturbinenkreislauf inklusive Kessel auf Vorwärmtemperatur gehalten wird, so dass der Dampfturbinenteil ebenso schnell angefahren werden kann, wie die Gasturbogruppe selbst. In gleicher Weise wirkt sich die Beaufschlagung der Dampfturbine während des Anfahrvorganges mit Dampf aus dem Speicher entsprechend mässiger Temperatur aus. Daneben ergibt sich aus der Erfindung ein weiterer Vorteil, der darin besteht, dass für den Anfahrvorgang keine grosse elektrische Leistung erforderlich ist, dergestalt, dass ein sogenannter "Black Start" möglich ist.
Zusammenfassend lassen sich die Vorteile der Erfindung wie folgt zusammenfassen:
- Eine integrale Schnellstartfähigkeit der ganzen Kombianlage ist gegeben.
- Die Kombianlage ist autonom startfähig.
- Die ganze Kombianlage ist kostengünstig, weil sie zur Steigerung des Startvermögens auf kostspielige elektrische Hilfsaggregate verzichten kann.

Vorteilhafte und zweckmässige Weiterbildungen der erfindungsgemässen Aufgabenlösung sind in den abhängigen Ansprüchen gekennzeichnet.

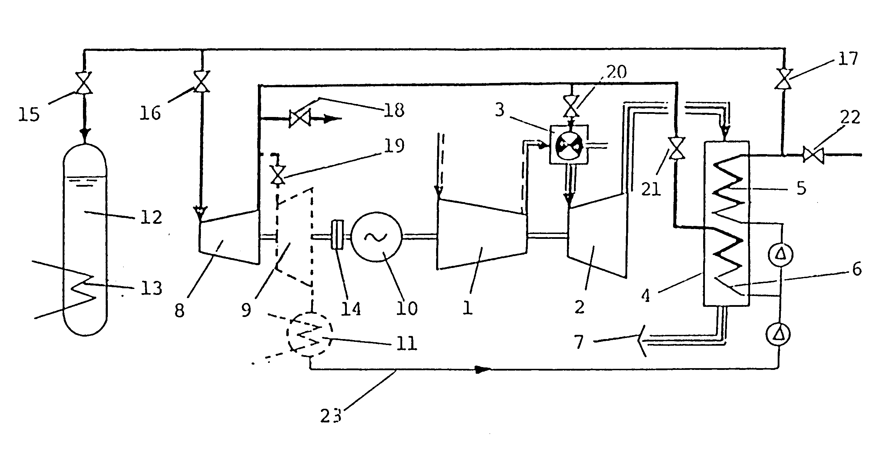

Im folgenden wird anhand der Zeichnung ein Ausführungbeispiel der Erfindung schematisch dargestellt und näher erläutert. Alle für das unmittelbare Verständnis der Erfindung nicht erforderlichen Elemente sind fortgelassen. Die Strömungsrichtung der Medien ist mit Pfeilen angegeben.

Die einzige Figur zeigt:
ein Kreislaufschema einer Kombianlage.

### Bescheibung des Ausführungsbeispiels

Die einzige Figur zeigt eine Schaltung einer Kraftwerksanlage (= Kombianlage), welche aus dem Zusammenwirken einer Gasturbogruppe mit einem Dampfturbinenkreislauf besteht, wobei zwischen die beiden Blöcke ein Abhitzekessel 4 geschaltet ist. Die dem Abhitzekessel 4 sowie dem Dampfturbinenkreislauf vorgeschaltete Gasturbogruppe besteht im wesentlichen aus einem Verdichter 1, einer mit diesem vorzugsweise auf einer gemeinsamen Welle angeordneten Gasturbine 2, einem an die Rotation dieser beiden Maschinen angekoppelten Generator 10 und einer zwischen Verdichter 1 und Gasturbine 2 angeordneten Brennkammer 3. Die vom Verdichter 1 angesaugte Luft wird hierein komprimiert, anschliessend strömt diese Luft in die Brennkammer 3. Als Brennstoff zum Betrieb dieser Brennkammer 3 kommen gasförmige und/oder flüssige Brennstoffe in Frage. Die in der Brennkammer 3 aufbereiteten Heissgase beaufschlagen im anschliessenden Prozess die Gasturbine 2; nach deren Entspannung strömen diese druckmässig verbrauchten Heissgase als Rauchgase durch den Abhitzekessel 4, in welchem deren thermischer Rest potential weiter ausgenutzt wird, soweit, als durch Wärmetausch die Dampferzeugung für die Beaufschlagung einer nachgeschalteten Dampfturbine 8 bereitgestellt wird. Wie die Figur zeigen will, kann der ersten Dampfturbine 8 eine weitere Dampfturbine 9 nachgeschaltet sein, welche beispielsweise eine Niederdruckturbine ist. Beim dargestellten Abhitzekessel 4 handelt es sich um einen Zweidruck-Abhitzekessel. Selbstverständlich kann auch ein Eindruck-Abhitzekessel eingesetzt werden. Jener hat aber gegenüber diesem den Vorteil, dass die Temperatur der Rauchgase tiefer abgesenkt werden kann, womit der Wirkungsgrad der Kombianlage gesteigert wird. Wahlweise kann dem Abhitzekessel 4 eine in der Figur nicht dargestellte Zusatzfeuerung beigegeben werden, welche die Gasturbinenabgase auf ein höheres Temperaturniveau aufbereitet. Die letztgenannte Vorkehrung erweist sich dann als vorteilhaft, wenn bei Lastspitzen die Stromleistung der Kombianlage zu steigern ist. Möglich ist ferner auch der Einsatz eines Dreidruck-Abhitzekessels. Aus der thermischen Energie der Gasturbinenabgase wird also vorwiegend Hoch- und Niederdruckdampf erzeugt, der die entsprechende Dampfturbine beaufschlagt. Diese Dampfturbinen werden vorteilhaft, wie aus der Figur hervorgeht, an den gleichen Generator 10 der Gasturbogruppe gekoppelt 14. Durch die Erzeugung von zwei Dampfdrücken lässt sich das Potential der Gasturbinenabgase optimal ausnützen, dergestalt, dass diese Abgase, die am Ende des Gasturbinenprozesses noch eine Temperatur von ca. 500 Grad Celsius aufweisen, bis auf ca. 100 Grad Celsius abgesenkt werden können. Der entspannte Dampf strömt nach Verlassen der letzten Dampfturbine 9 dann in einen Kondensator 11, wobei hier als Abkühlungsmedium Wasser oder Luft zum Einsatz gelangen kann. Durch Pumpen gefördert, strömt das Kondensat üblicherweise in einen nicht dargestellten Vorwärmer und von hier aus in einen ebenfalls nicht gezeigten Speisewasserbehälter und Entgaser. Nach Durchlauf dieser Stufen ist das Kondensat so weit aufbereitet, dass es wieder in den Abhitzekessel 4 über eine Leitung 23 rückgeführt werden kann.
Die Kombianlage ist mit einem Dampfspeicher 12 verbunden, welcher den finalen Zweck hat, wie weiter unten noch zur Ausführung gelangen wird, ein sicheres, autonomes Anfahren der Kombianlage zu ermöglichen. Der Dampfspeicher 12 wird während des Betriebes der Kombianlage über ein Ventil 15, das in der Dampfleitung aus dem Hochdruckdampferzeugung des Abhitzekessel 4 plaziert ist,sukzessiv geladen, was durch Kondensation von Dampf geschieht. Zusätzlich besteht die Möglichkeit, über eine Heizeinrichtung 13 den Dampfspeicher 12 mit Fremdenergie zu laden. Soll nun die Kombianlage angefahren werden, so wird bei geschlossenem Ventil 17 in der Dampfleitung aus dem Abhitzekessel 4 über das Ventil 15 Dampf aus dem Dampfspeicher 12 vor ein Ventil 16 gegeben, das sich in der Dampfbeaufschlagungsleitung zur Dampfturbine 8 befindet. Durch leichtes Oeffnen dieses Ventils 16 und vollständiges Oeffnen eines weiteren Ventils 18, das sich in der Abdampfleitung der Dampfturbine 8 befindet, kann mittels des Dampfturbinenteils 8 die erforderliche Anfahrleistung für die Gasturbogruppe 1, 2 erzeugt werden. Diese Anfahrleistung beträgt etwa 5% der von beiden Dampfturbinenteilen 8, 9 nominal abgegebenen Leistung. Da durch, dass mit starker Drosselung im vor der Dampfturbine 8 plazierten Ventil 16 auf einige bar über das weitere in der Abdampfleitung plazierte Ventil 18 mit freiem Auspuff gefahren werden kann, arbeitet der Dampfturbinenteil 8 unter guten thermodynamischen Verhältnissen. Während dem je ein geschlossenes Ventil 20 und 21 die Verbindung des Abdampfes aus dem Dampfturbinenteil mit der Brennkammer 3 und dem Niederdruck-Verdampferbündel 6 des Abhitzekessel 4 unterdrückt, erlaubt eine stark gedrosselte Stellung eines weiteren Ventil 19, das in der Abdampfleitung des Dampfturbinenteils 8 stromauf des Auspuffventils 18 plaziert ist, den Durchtritt der erforderlichen Kühldampfmenge durch den dem ersten Dampfturbinenteil 8 nachgeschalteten Dampfturbinenteil 9, wobei durch den dem letztgenannten Dampfturbinenteil nachgeschalteten Kondensator 11 ein Vakuum erzeugt wird, welches die Ventilationsverluste minimiert. Paral lel dazu beginnt der Kompressor 1 Luft in die Brennkammer 3 zu fördern, so dass allmählich Brennstoff zugegeben und gezündet werden kann. Die sich bildenden Heissgase beaufschalgen sofort die Turbine 2 und helfen mit, die Gasturbogruppe zu beschleunigen. Schliesslich wird Nenndrehzahl erreicht, der Generator 10 mit dem Stromnetz synchronisiert, parallel geschaltet und belastet, ohne dass die Dampfzufuhr zur ersten Turbine 8 unterbrochen wird. Letztere ist nämlich jetzt soweit gut vorgewärmt und somit in der Lage, mit Dampf höheren Druckes beaufschlagt zu werden, sobald solcher im Abhitzekessel 4 in ausreichender Qualität erzeugt wird. Man wird also dort ein in der nicht dargestellten Verbindung zum Kondensator 11 plaziertes Bypassventil 22 schliessen und das andere Ventil 17 in der Dampfbeaufschlagungsleitung zur Dampfturbine 8 öffnen.
Durch totales Oeffnen der beiden Ventile 16 und 19 in der jeweiligen Dampfbeaufschlagungsleitung zu den beiden Dampfturbinen 8 und 9 sowie durch Schliessen des Auspuffventil 18 kann der ganze Dampfkreislauf in Betrieb genommen werden. Während dieser Uebergangsphase kann immer noch Dampf aus dem Speicher 12 dem Dampfturbinenkreislauf beigegeben werden. Sobald die Dampfproduktion im Hochdruck-Dampferzeugerbündel 5 des Abhitzekessels 4 quantitativ vollauf genügt, kann der Dampfspeicher 12 über das Speicherventil 15 wieder geladen werden. Wenn die Gasturbine 2 der Kombianlage als Dampfeinblasungsturbine, d.h. als sogenannte "Steam Injection Gas Turbine" (STIG) ausgebildet ist, und demzufolge im vorliegenden Fall die zweite Dampfturbine 9 und den Kondensator 11 fehlen, wird der Abdampf des einzigen Dampfturbinenteils 8 dierekt in den Gasturbinenkreislauf geleitet, und zwar mit Vorteil im Bereich der Brennkammer 3. Es ist indessen auch möglich, mindestens einen Teil dieses Abdampfes als Kühlmittel für die Gasturbine einzusetzen.

Wie oben bereits erwähnt, um im Abhitzekessel 4 die Rauchgase 7 möglichst vollständig, d.h. so weit wie der entsprechende Säuretaupunkt es zulässt, auszunützen, kann es, je nach Gasturbinentyp, vorteilhaft sein, dem Hochdruck-Dampferzeuger bündel 5 noch ein Niederdruck-Dampferzeugerbündel 6 nachzuschalten. Der im letztgenannten Bündel erzeugte Dampf entspricht druckmässig vorteilhafterweise demjeneiden, der über das Ventil 20 aus dem DampfturbinenKreislauf in die Brennkammer 3 einströmt.
Aber auch wenn durch die Existenz des zweiten Dampfturbinenteils 9 und des Kondensators 11 eine sogenannte Kombianlage vorliegt, kann es vorteilhaft sein, einen Teil des Dampfes passenden Druckes über das Ventil 20 oder auf einem anderen Weg dem Gasturbinenkreislauf zuzuführen, sei dies gegen zuviel NOx, zu Kühlzwecken oder aus sonstigen Gründen.
Eine derart gestaltete Anlage kann mit Hilfe des Dampfspeichers 12 den Dampfturbinenkreislauf inklusive Abhitzekessel 4 auf Vorwärmtemperatur halten, so dass der Dampfturbinenteil 8 eben so schnell wie die Gasturbine 2 angefahren werden kann. Es handelt sich also um die Vereinigung eines schnellen Startvermögens einer Gasturbine mit dem guten Wirkungsgrad einer Kombianlage, mit den zusätzlichen Vorteilen, die allenfalls aus einer Dampfeinleitung (STIG) in die Gasturbogruppe resultieren. Für den Anfahrvorgang selbst muss keine grosse elektrische Leistung zur Verfügung stehen, wie dies aus obigen Ausführungen hervorgeht. Ein sogenannter "Black Start" wird möglich.
Die Kupplung 14 zwischen Gasturbogruppe und Dampfturbinenkreislauf, welche beispielsweise als Ueberholkupplung ausgebildet ist, ermöglicht den Betrieb der Kombianlage als sogenannten "SIMPLE STIG", d.h. ohne den Einsatz der Dampfturbine 8. Eine solche ist dann keine Gegendruckturbine, sondern lediglich als Anwurfturbine konzipiert; sie wird dann nach erfolgtem Start wieder abgefahren. Der Abhitzekessel 4 als Dampferzeuger hat dann nur einen Niederdruckdampf zu erzeugen, wie er für die Einblasung in die Brennkammer gebraucht wird. Auch der Dampfspeicher 12 ist bei einer solchen Konfiguration dann auf dieses Druckniveau beschränkt, ausser man lade ihn mit Fremdenergie 13 auf ein höheres Potential auf, was über die bereits genannte Heizeinrichtung indirekt oder durch einen Dampf direkt erfolgen kann.

## Patentansprüche

1. Verfahren zum Anfahren einer Kombianlage, im wesentlichen bestehend aus mindestens einer Gasturbine mit Generator, mindestens einem Dampfkreislauf mit Dampfturbine und Kondensator, einem Dampfspeicher, der mit Dampf aus einem Abhitzekessel und/oder durch eine Fremdenergiequelle aufgeladen wird, wobei dem Dampfspeicher für das Anfahren der Gasturbine eine Dampfmenge entnommen und der Dampfturbine zugeleitet wird, dadurch gekennzeichnet,
a) dass die Dampfturbine (8, 9) mehrstufig ausgebildet ist und beim Anfahren die Hochdruck-Dampfturbine (8) mit einer Dampfmenge aus dem Dampfspeicher (12) über ein Regelorgan (16) beaufschlagt wird,
b) dass das Ventilieren der der Hochdruck-Dampfturbine (8) nachgeschalteten Dampfturbinenstufen (9) durch Ausblasen eines Teils dieser Dampfmenge über ein stromab der Hochdruck-Dampfturbine (8) angeordnetes Regelorgan (18) erfolgt, und
c) dass der andere Teil dieser Dampfmenge über ein weiteres Regelorgan (19) der nachgeschalteten Dampfturbinenstufen (9) zugeleitet wird, dergestalt, dass diese Teildampfmenge im Kondensator (11) niedergeschlagen wird, so dass in den nachgeschalteten Dampfturbinenstufen (9) ein Vakuum entsteht.

## Claims

1. Method of starting up a combined plant, essentially comprising at least one gas turbine with generator, at least one steam circuit with steam turbine and condenser, a steam accumulator which is charged with steam from a waste heat boiler and/or by an extraneous energy supply, an amount of steam being drawn from the steam accumulator for starting up the gas turbine and being passed to the steam turbine, characterized
a) in that the steam turbine (8, 9) is of multi-stage design and, during starting-up, the high-pressure steam turbine (8) is supplied with an amount of steam from the steam accumulator (12) via a regulating device (16),
b) in that the steam turbine stages (9) downstream of the high-pressure steam turbine (8) are ventilated by blowing out some of said amount of steam via a regulating device (18) disposed downstream of the high-pressure steam turbine (8), and
c) in that the rest of said amount of steam is passed via a further regulating device (19) to the downstream steam-turbine stages (9) in such a way that this component amount of steam is precipitated in the condenser (11) with the result that a vacuum is produced in the downstream steam turbine stages (9).

## Revendications

1. Procédé pour le démarrage d'une installation combinée, se composant essentiellement d'au moins une turbine à gaz avec générateur, d'au moins un circuit de vapeur avec turbine à vapeur et condenseur, d'un accumulateur de vapeur qui est chargé en vapeur à partir d'une chaudière de récupération et/ou par une source d'énergie extérieure, dans lequel une quantité de vapeur est prélevée de l'accumulateur de vapeur pour le démarrage de la turbine à gaz et envoyée à la turbine à vapeur, caractérisé en ce que
a) la turbine à vapeur (8, 9) est à plusieurs étages et au démarrage la turbine à vapeur à haute pression (8) est alimentée avec une quantité de vapeur venant de l'accumulateur de vapeur (12) par l'intermédiaire d'un organe de réglage (16); en ce que
b) la ventilation de l'étage de turbine à vapeur (9) qui suit la turbine à vapeur à haute pression (8) est réalisée par expulsion d'une partie de cette quantité de vapeur par l'intermédiaire d'un organe de réglage (18) disposé en aval de la turbine à vapeur à haute pression (8); et en ce que
c) l'autre partie de cette quantité de vapeur est envoyée à l'étage de turbine à vapeur qui suit (9) par l'intermédiaire d'un organe de réglage (19), de telle manière que cette quantité partielle de vapeur soit précipitée dans le condenseur (11), de telle façon qu'il apparaisse une dépression dans l'étage de turbine à vapeur qui suit (9).
